(19) Europäisches Patentamt
European Patent Office
Office européen des brevets

(11) **EP 2 730 398 B1**

(12) **EUROPEAN PATENT SPECIFICATION**

(45) Date of publication and mention
of the grant of the patent:
**31.05.2017 Bulletin 2017/22**

(51) Int Cl.:
**B30B 11/04** (2006.01)  **B30B 15/00** (2006.01)
**B30B 15/06** (2006.01)  **B30B 9/30** (2006.01)
**E04B 1/80** (2006.01)

(21) Application number: **13192008.4**

(22) Date of filing: **07.11.2013**

(54) **Apparatus for molding core of vacuum insulation panel and vacuum insulation panel manufactured thereby**

Vorrichtung zum Formen eines Kerns einer Vakuumisolierplatte und damit hergestellte Vakuumisolierplatte

Appareil de moulage de noyau de panneau d'isolation sous vide et panneau d'isolation sous vide fabriqué par ce procédé

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **07.11.2012 KR 20120125370**
**15.11.2012 KR 20120129401**

(43) Date of publication of application:
**14.05.2014 Bulletin 2014/20**

(73) Proprietor: **OCI Company Ltd.**
**Seoul 100-718 (KR)**

(72) Inventors:
• **Kim, Hae Duck**
**570-739 Jeollabuk-do (KR)**
• **Kim, Hyun Cheol**
**407-721 Incheon (KR)**
• **Lim, SinSup**
**561-837 Jeollabuk-do (KR)**

(74) Representative: **Puschmann Borchert Bardehle Patentanwälte Partnerschaft mbB**
**Bajuwarenring 21**
**82041 Oberhaching (DE)**

(56) References cited:
EP-A1- 0 297 739    EP-A1- 1 106 336
EP-A1- 2 364 830    EP-A2- 1 098 104
WO-A1-01/18316    DE-A1- 4 432 896
GB-A- 2 284 172    US-A- 2 026 940
US-A- 4 564 547

**Description**

## BACKGROUND

1. Field

The following description relates to an apparatus for molding a core of a vacuum insulation panel according to claim 1.

2. Description of Related Art

Insulation panels are used to limit transference of heat in buildings, pipes, and ice boxes where there is temperature difference between the interior and exterior thereof General insulation panels or vacuum insulation panels are mostly used for the above purpose.

A general insulation panel refers to an insulation panel having an insulation performance of 30mW/mK, whereas a vacuum insulation panel is an insulation panel having a high insulation performance of 3~mW/mK. However, due to the high material costs and difficult manufacturing technology, insulation panels were not widely being used despite their excellent heat insulation property.

Recently, due to significant advance of manufacturing technologies, various countries such as Germany, Great Britain, Japan, USA, Canada, Korea, and China etc. are making efforts to commercialize vacuum insulation panels, but high material costs and manufacturing process costs are becoming a burden.

A vacuum insulation panel consists of a molded insulation body made of inorganic substances and a gas insulation film covering the molded insulation body. The biggest feature of a vacuum insulation panel is that the interior of the molded insulation body is prepared in a vacuum condition. Herein, the molded insulation body that fills the inside of the vacuum insulation panel is called a core. One way to manufacture a core is to use a glass fiber compressed material or mixed powder including silica.

The case of using mixed powder to manufacture a core was disclosed in KR 20120028048. KR 20120028048 discloses the method of pressing mixed powder that includes fumed silica in a molding cast through a continuously revolving molding cast, and thus shows enhanced mechanical strength, and is capable of molding a core of which the exterior has a rectangular shape with reduced molding time.

US 4564547, US 2026940, GB 2284172 and EP1098104 describe apparatus for manufacturing blocks by compacting granular material in a mold by means of a pressing tool.

However, as a molding plate for pressing mixed powder is used repeatedly, there occurs a problem where some of the mixed powder is not molded as a core and remain in the exterior surface of the molding plate, producing defective cores.

In order to resolve this problem, felt was installed on the exterior of the molding plate so as to prevent direct contact between the molding plate and mixed powder, but when used for more than a certain number of times, the felt is damaged and thus affects the molding of the core or the apparatus must be stopped to replace the felt, thereby delaying the process time and reducing the productivity.

Meanwhile, a manufactured core is used as a vacuum insulation panel through a packaging process where it is accommodated in a packaging material of which the interior is kept in a vacuum condition, which prevents external elements from coming inside the core, thereby increasing the durability of the vacuum insulation panel. Herein, the packaging process may be performed by accommodating the core inside the packaging material, and then discharging the air inside the packaging material outside through a vacuum pump etc.

However, there occurs a problem where as air is discharged starting from not the inside but from outside the packaging material, the air inside the packaging material is not discharged completely or the discharge time is increased.

The problem of the aforementioned packaging process is that the vacuum inside the vacuum insulation panel acts as a limitation to improvement, generates creases on the surface of the vacuum insulation panel, and creates leakage between the wall and the surface of the vacuum insulating panel when attaching the vacuum insulation panel to the wall, reducing the insulating effect.

## SUMMARY

Therefore, a purpose of the present disclosure is to resolve the aforementioned problems of prior art, that is, to provide an apparatus for molding a core of a vacuum insulation panel capable of easily discharging from the molding space residue that may have negative effects on core molding.

Another purpose of the present disclosure is to provide an apparatus for molding a core of a vacuum insulation panel capable of efficiently discharging air inside the packaging material when packaging the core by forming a pattern on an exterior surface of the core at the same time as molding the core, and a vacuum insulation panel manufactured thereby.

In one general aspect, there is provided an apparatus for molding a core of a vacuum insulation panel, the apparatus comprising: a pair of molding plates distanced from and facing each other to form a molding space where a core is molded; a molding cast configured to close the molding space from outside; and a pressing member configured to press at least one of the pair of molding plates; wherein the at least one of the pair of molding plates comprises: a pattern portion which is provided on a first surface facing the molding space, and which transcribes a pattern on an exterior surface of the core; and an exhaust cavity penetrating the molding plate in a thickness direction from the first surface to a second surface opposite the first surface. The pair of molding plates comprises: a first molding plate that is provided on an upper side of the molding space to open and close the molding cast; and a second molding plate that is provided on a lower side of the molding space. The second molding plate, which moves in the molding space, has the first surface having a bigger cross-sectional area than a cross-sectional area of the second surface in such a manner that the distance between the molding cast and the second molding plate becomes wider in a direction away from the molding space.

In the general aspect of the apparatus, the cross-sectional area of the exhaust cavity of a second surface may be bigger than that of the first surface.

In the general aspect of the apparatus, the pattern portion may be provided with repeatedly arranged protrusions that protrude from the first surface and repeatedly arranged recesses that recess towards the inside of the first surface.

In the general aspect of the apparatus, the height of the protrusion may be 0.02 mm to 0.5mm.

In the general aspect of the apparatus, the molding plate may comprise a coating member.

In the general aspect of the apparatus, the diameter of the exhaust cavity on the first surface may be 0.2 mm to 3mm.

In the general aspect of the apparatus, the diameter of the exhaust cavity on the second surface may be 2 mm to 10mm.

In the general aspect of the apparatus, the exhaust cavity may comprise an increase section where the closer to the second surface from the first surface, the bigger the diameter thereof, and a maintain section where the diameter thereof is maintained to be the same.

In the general aspect of the apparatus, the number of exhaust cavity formed per unit of $1m^2$ of the molding plate may be 650 to 3300 or 1200 to 1800.

In the general aspect of the apparatus, the molding cast may have a bigger bottom surface that faces the second molding plate than the second molding plate.

According to the present disclosure, there is provided an apparatus for molding a core of a vacuum insulation panel that may easily discharge residue that are attached to the exterior surface of the molding plate and have negative effects when molding the core, and a vacuum insulation panel manufactured thereby.

In addition, the diameter of an exhaust cavity of the molding plate may be formed in such a manner that the farther away from the core, the bigger the diameter of the exhaust cavity of the molding plate, thereby preventing the core material being stuck in the exhaust cavity and the exhaust cavity being blocked.

Furthermore, as the powder provided in the molding space through the coating member contact the molding plate, it is possible to prevent the powder from being attached to the molding plate.

In addition, it is possible to easily form shapes, letter etc. that a user wants on the exterior of the core.

Furthermore, it is possible to prevent movement of the molding plate being limited by the core material stuck between the molding plate and molding cast.

In addition, it is possible to facilitate discharging of air during the packaging process through a pattern formed on the core, thereby enhancing the adherence of the packaging material and the core.

Furthermore, it is possible to improve the appearance of exterior of the vacuum insulation panel through the pattern formed on the core.

Other features and aspects may be apparent from the following detailed description, the drawings, and the claims.

**BRIEF DESCRIPTION OF THE DRAWINGS**

FIG. 1 is a schematic skewed view of an apparatus for molding a core of a vacuum insulating panel according to an exemplary embodiment of the present disclosure.
FIG. 2 is a schematic cross-sectional view of an apparatus for molding a core of a vacuum insulating panel according to FIG. 1.
FIG. 3 is a schematic bottom view illustrating a first molding plate in an apparatus for molding a core of a vacuum insulating panel according to FIG. 1.

FIG. 4 is a schematic cross-sectional view of pressing a molding space through a pressing member in an apparatus for molding a core of a vacuum insulating panel according to FIG. 1.

FIG. 5 is a schematic cross-sectional view of air and residue being discharged through a first molding plate and second molding plate in an apparatus for molding a core in a vacuum insulating panel according to FIG. 1.

FIG. 6 is a schematic skewed view of a pattern formed on a surface of a core in a vacuum insulation panel according to an exemplary embodiment of the present disclosure.

FIG. 7 is a schematic cross-sectional view of a vacuum insulation panel according to FIG. 6.

Throughout the drawings and the detailed description, unless otherwise described, the same drawing reference numerals will be understood to refer to the same elements, features, and structures. The relative size and depiction of these elements may be exaggerated for clarity, illustrating, and convenience.

## DETAILED DESCRIPTION

The following detailed description is provided to assist the reader in gaining a comprehensive understanding of the methods, apparatuses, and/or systems described herein. Accordingly, various changes, modifications, and equivalents of the systems, apparatuses and/or methods described herein will be suggested to those of ordinary skill in the art. Also, descriptions of well-known functions and constructions may be omitted for increased clarity and conciseness.

Hereinbelow is detailed description of an apparatus for molding a core of a vacuum insulation panel according to an exemplary embodiment of the present disclosure with reference to the drawings attached hereto.

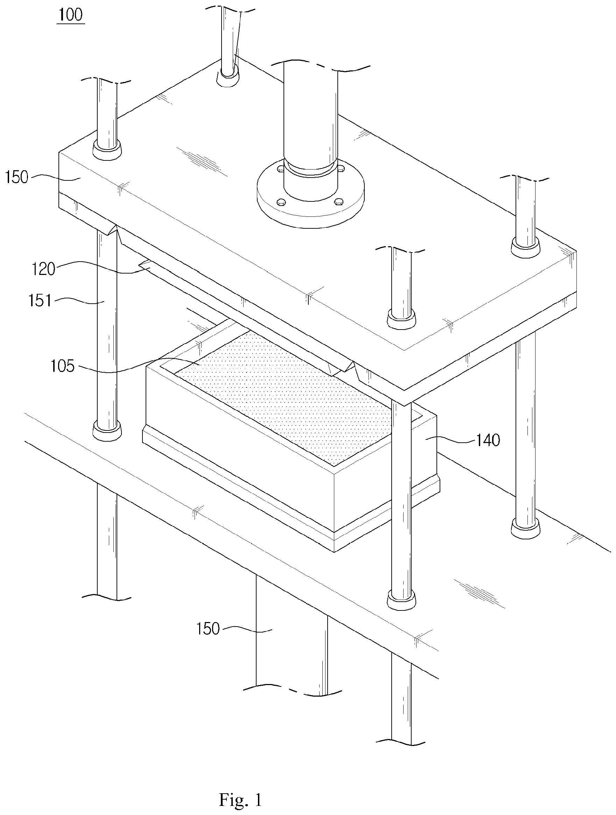

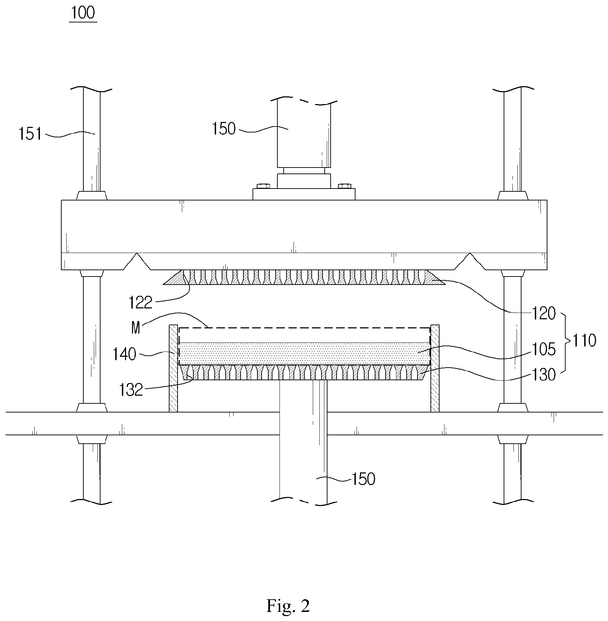

FIG. 1 is a schematic skewed view of an apparatus for molding a core of a vacuum insulating panel according to an exemplary embodiment of the present disclosure, and FIG. 2 is a schematic cross-sectional view of an apparatus for molding a core of a vacuum insulating panel according to FIG. 1.

With reference to FIG. 1 or FIG. 2, the apparatus for molding a core of a vacuum insulation panel according to an exemplary embodiment of the present disclosure 100 may form a specific pattern on a surface of the core at the same time of molding the core, and may easily discharge from the molding space the air inside the core material that forms the core and the floating particles that may be generated in the molding process. The apparatus for molding a core of a vacuum insulation panel 100 comprises a molding plate 110, molding cast 140, and a pressing member 150.

The molding plate 110 is provided as a pair of plate members that face each other and are distanced from each other, forming a molding space M that is a space between the pair of molding plates 110. The molding plate 110 presses and compresses the core material provided inside the molding space M, and in the exemplary embodiment of the present disclosure, the pair of molding plates 110 comprises a first molding plate 120 disposed on the upper side and a second molding plate 130 disposed on the lower side, the two molding plates 120, 130 facing each other in the gravity direction.

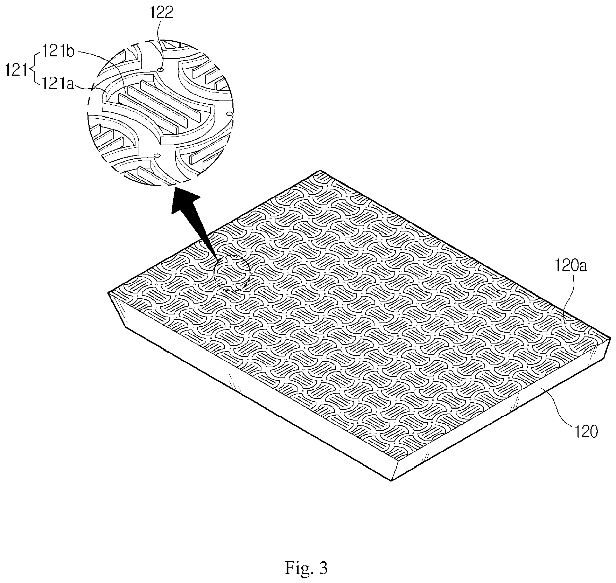

FIG. 3 is a schematic bottom view illustrating a first molding plate in an apparatus for molding a core of a vacuum insulation panel according to FIG. 1.

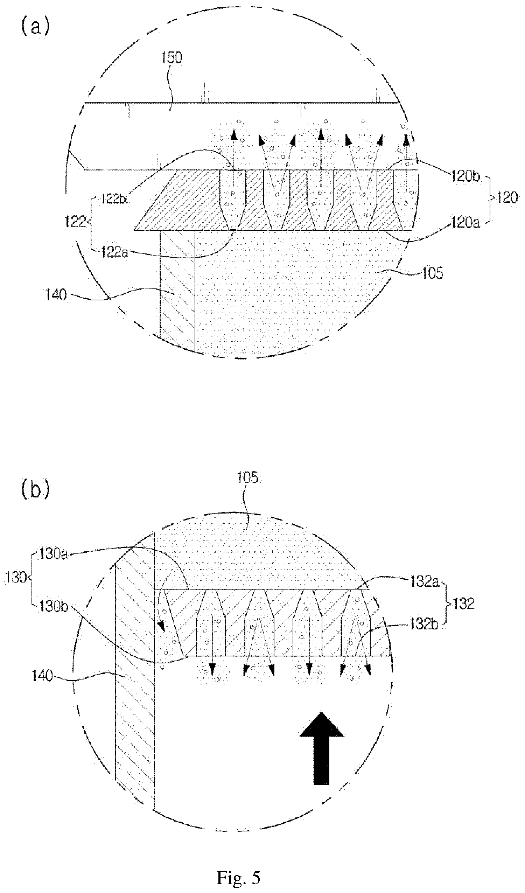

With reference to FIG. 3, the first molding plate 120 presses the molding space M from the upper side. On a first surface 120a that is adjacent to the molding space M, a pattern portion 121 is formed so that the core material is pressed and molded at the same time a pattern is formed, and an exhaust cavity 122 is formed that penetrates the first surface 120a and a second surface 120b(see FIG. 5)

The pattern portion 121 is provided in a particular pattern on the first surface 120a of the molding plate 120 such that a same shape is transcript on an exterior surface of the core 105 when molding the core 105.

Herein, the pattern portion 121 is provided in a predetermined shape according to the manufacturer's intentions. Herein, a particular shape may be repeatedly formed such that the overall shape has the predetermined shape.

Especially, the pattern portion 121 may be utilized as a flow path of air when packaging the core 150 molded according to the exemplary embodiment of the present disclosure with the packaging material and thus may improve the degree of vacuum.

Herein, in order to be utilized as a flow path for air, the pattern portion 121 may comprise as a protrusion 121a that is protruded towards the outside of the first surface 120a and a recess 121b that is recessed towards the inside of the first surface 120a. The pattern portion 121 may facilitate the air flow, and may reduce the power consumption of a vacuum pump and vacuum pumping time necessary to have the interior of the packaging material in a vacuum condition. For example, the height of the protrusion 121a or the depth of the recess 121b may be 0.02mm to 0.5mm.

The exhaust cavity 122 is a path that may discharge the air inside the molding space M during a molding process. The exhaust cavity 122 penetrates the first molding plate 120. On the first molding plate 120, the exhaust cavity 122b(see FIG. 5) of the second surface 120b side is bigger than the exhaust cavity 122a(see FIG. 5) of the first surface 120a side.

This is to prevent some of the core material from blocking the exhaust cavity 122 when being discharged together with the air inside the molding space M, that is to prevent the exhaust cavity 122 being blocked by the core material and interrupting the air or residue being discharged.

The abovementioned function is one of the basic principles of fluid mechanics that can be explained by the Bernoulli's Theorem that the physicist Bernoulli announced in 1738. Herein, the Bernoulli's Theorem refers to a mathematical formula as shown below representing a relationship between the velocity, pressure and height when an ideal fluid that is incompressible inviscid flows.

$$\frac{P}{\rho} + \frac{v^2}{2} + gh = constant$$

Herein, P represents the pressure of the fluid at a particular point, p represents the density of the fluid, v represents the velocity at a particular point, g represents the acceleration of gravity, and h represents the height at a particular point. When the above formula is applied to the exhaust cavity 122 according to the exemplary embodiment of the present disclosure, the difference of height between the first surface 120a and the second surface 120b, that is the thickness of the first molding plate 120 is negligibly small, and thus gh which means the kinetic energy in the above mathematical formula could be disregarded, showing that the fluid velocity v and the pressure P are inversely proportional to each other.

In addition, a continuity equation that is another expression of the mass conservation law is as shown below.

$$Q = A_1 v_1 = A_2 v_2$$

Herein, Q represents the discharge amount, A represents the cross sectional area that the fluid passes, and v represents the velocity of the fluid. That is, it can be seen that the velocity of the fluid and the cross sectional area that the fluid passes when flowing through a particular area are inversely proportional to each other.

Assuming that the air flow from the molding space M along the exhaust cavity 122 is a laminar flow, when applying the aforementioned Bernoulli's Theorem and the continuity equation to the exhaust cavity 122 and molding space M of the present disclosure, regarding the cross-sectional size A, the cross-sectional size at the molding space M ($A_0$) is the greatest, followed by the cross-sectional size of the exhaust cavity 122a of the first surface 120a side ($A_1$), followed by the cross-sectional size of the exhaust cavity 122b of the second surface 120b side ($A_2$).

When this is applied to the continuity equation, regarding the velocity of fluid, the velocity of fluid passing the exhaust cavity 122a of the first surface 120a side is the fastest, followed by the velocity of fluid passing the exhaust cavity 122b of the second surface 120b side, followed by the velocity of fluid inside the molding space M.

Thus,

$$A_1 < A_2 << A_0$$

$$v_1 > v_2 \gg v_0$$

relationship is established.

Herein, when residue is attached to the exhaust cavity 122, the kinetic energy of the fluid being discharged may act as energy source for pushing the residue out from the exhaust cavity 122, and since the kinetic energy is proportionate to the square of velocity, residue may be pushed out most actively from the exhaust cavity 122a of the first surface 120a side having the fastest fluid discharge velocity.

In addition, the viscosity force of the fluid being discharged may act as the force for pushing out the residue attached to the exhaust cavity 122 from the exhaust cavity 122, and since the viscosity force is proportionate to velocity, residue may be pushed out most actively from the exhaust cavity 122a of the first surface 120a side having the fastest fluid discharge velocity.

In other words, since the kinetic energy and viscosity force of fluid that may act as a cause for pushing out residue from the exhaust cavity 122 acts the greatest at the exhaust cavity 122a of the first surface 120a, residue may be discharged most actively from the exhaust cavity 122a of the first surface 120a side.

In addition, when the Bernoulli's Theorem is applied to the aforementioned relationship,

$$P_0 \gg P_2 > P_1$$

relationship is established.

Consequently, since the pressure $P_0$ inside the molding space M is significantly bigger than the pressure $P_1$ at the exhaust cavity 122a and the pressure $P_2$ at the exhaust cavity 122b of the second surface 120b, regardless of size of the pressure P1 at the exhaust cavity 122a of the first surface 120a side and the size of the pressure P2 at the exhaust cavity 122b of the second surface 120b, the fluid inside the molding space M may be discharged smoothly along the exhaust cavity 122 from the molding space M.

Herein, when the Bernoulli's Theorem is applied, $v_1 > v_2$, $P_1 < P_2$ relationship is established, and as a result, the pressure $P_1$ at the exhaust cavity 122a of the first surface 120a side is greater than the pressure $P_2$ of the fluid at the exhaust cavity 122b of the second surface 120b side, and even if some of the raw material is discharged through the exhaust cavity 122, some of the raw material would not accumulate in the exhaust cavity 122a of the first surface 120a side, but would float to the exhaust cavity 122b of the second surface 120b and be discharged to the exterior.

Therefore, it is possible to smoothly perform the process of molding the core by adjusting the size of the exhaust cavity 122a of the first surface 120a and the exhaust cavity 122b of the second surface 120b as long as the exhaust cavity 122a of the first surface 120a side is smaller than the size of the exhaust cavity 122b of the second surface 120b.

For example, the diameter of the exhaust cavity 122a of the first surface 120a may be between the range of 0.2mm to 3.0mm, and the diameter of the exhaust cavity 122b of the second surface 120b may be between the range of 2.0mm to 10.0mm as long as it is bigger than the exhaust cavity 122a of the first surface 120a.

For example, according to an exemplary embodiment of the present disclosure, the diameter of the exhaust cavity 122a of the first surface 120a may be 1.5mm and the diameter of the exhaust cavity 122b of the second surface 120b may be 5.0mm.

Herein, the diameter of the exhaust cavity 122a of the first surface 120a side and the diameter cavity 122b of the second surface 120b side may be determined in comprehensive consideration of the components of the core 105, and the pressure on the molding space M during the core 105 molding process.

Meanwhile, according to the present exemplary embodiment of the present disclosure, the exhaust cavity 122 may comprise an increase section where the closer to the second surface 120b side from the first surface 120a, the bigger the area of cross-section, and a maintain section where the area of cross-section is maintained to be the same.

Otherwise, the exhaust cavity 122 may only comprise an increase section where the closer to the second surface 120b side from the first surface 120a the bigger the area of cross-section. Herein, the exhaust cavity 122 may be of any shape as long as the size of the exhaust cavity 122a of the first surface 120a side is smaller than the size of the exhaust cavity 122b of the second surface 120b side.

Meanwhile, the number of the exhaust cavity 122 may be adjusted such that the air of the molding space M may be discharged appropriately. 650 to 3300, and more desirably 1200 to 1800 exhaust cavity 122 may be provided per unit area $1m^2$ of the molding plate 110 so as to prevent loss of pressure on the first molding plate 120 from the upper side while appropriately discharging the air of the molding space M.

Herein, each exhaust cavity 122 may be distanced by a distance of 15mm to 40mm from one another and form a grid.

Meanwhile, the exhaust cavity 122 may discharge air of the molding space M during upward movement of the first molding plate 120 thereby reducing the resistance caused by the air and facilitating movement of the first molding plate 120.

Meanwhile, the exterior surface of the first molding plate 120 may be coated with a coating member(not illustrated). The coating member(not illustrated) may prevent residue including core material etc. from remaining on the first molding plate 120.

Furthermore, in the process where the core 105 contacting the first molding plate 120 is detached from the first molding plate 120 by the coating member(not illustrated), the coating member(not illustrated) may prevent the core material from being attached to the surface of the first molding plate 120.

Herein, the coating member(not illustrated) may be made of a fluoroplastic material.

More specifically, the coating member(not illustrated) of the first molding plate 120 is made of a fluoroplastic material having weak adhesion, and thus prevents the core from being damaged when the first molding plate 120 is distanced from the core 105. Likewise, the coating member(not illustrated) of the first molding plate 120 is made of a fluoroplastic material having low friction coefficient and adhesion, and thus may prevent the core from being damaged when discharging the core 105.

That is, using the coating member(not illustrated), it is possible to prevent residue from being attached on the molding plate 110 and to lower the friction coefficient between the core 105 and the molding plate 110 thereby preventing the core from being damaged when discharging the core.

The second molding plate 130 is a molding plate that is provided on the lower side of the molding space M such that it faces the molding plate 120. The second molding plate 130 is practically the same as the aforementioned first molding plate 120 except that it is disposed on the lower side of the molding apparatus 100, and thus detailed explanation thereof is omitted.

However, in the second molding plate 130, the cross-section area of the first surface 130a near the molding space M is bigger than the cross-section area of the second surface 130b. Accordingly, the farther away from the molding space M, the wider the distance between the second molding plate 130 and the molding cast 140. Such a shape performs practically the same function as the aforementioned exhaust cavity 122, thereby easily discharging the air inside the molding space M and residue including some of the core material and preventing them from being adhered between the second molding plate 130 and molding cast 140.

In addition, by reducing the area of contact between the second molding plate 130 and molding cast 140, it is possible to reduce the mechanical interference by the contact of the second molding plate 130 and molding cast 140 and reduce the air exhaust resistance, during an up-and-down movement of the second molding plate 130.

The molding cast 140 is a cast for closing the molding space M from outside and for determining the shape of the core 105 when molding the core.

The molding cast 140 in the exemplary embodiment of the present disclosure wraps around the side of the molding space M, and the upper surface and the lower surface are open to the exterior.

The pressing member 150 presses the molding plate 110 to press the core material from the inside of the molding space M. The pressing member150 according to an exemplary embodiment of the present disclosure is a well known technology and thus detailed explanation is omitted.

However, according to the exemplary embodiment of the present disclosure, the pressing member 150 is provided to apply preferably 1kgf/cm$^2$ to 10kgf/cm$^2$ of pressure to the molding space M. By pressing the core 105 with a pressure of such range, the pattern formed on the first surface of the molding plate 110 may be sufficiently transcript on the surface of the core 105, while minimizing the power consumption necessary for driving the pressing member 150 and easily controlling the density of the core 105.

Herein, the pressure applied by the pressing member 150 may be 1kgf/cm$^2$ to 10kgf/cm$^2$ in consideration of not only the density of the core 105 but also the number and size of the exhaust cavity 122, 132, and the shape of the first surface of the molding plate 110.

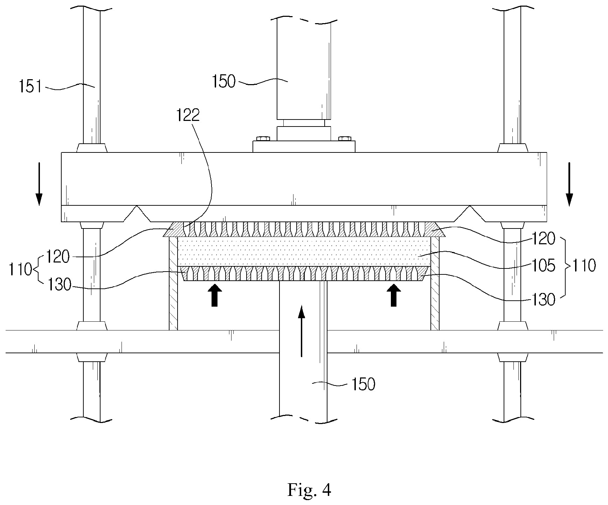

FIG. 4 is a schematic cross-sectional view of pressing a molding space through a pressing member in a molding apparatus of a core of a vacuum insulating panel according to FIG. 1.

Meanwhile, the pressing member 150 may be connected to at least one of the second surface 120b of the first molding plate 120 and the second surface 130b of the second molding plate 130 so as to move the first or second molding plates 120, 130 in the molding space M, and press the core material or core 105. With reference to FIG. 4, according to the exemplary embodiment of the present disclosure, the pressing member 150 is provided to press the first molding plate 120 and second molding plate 130, respectively.

In addition, there may be further provided a guide 151 that surface-contacts the pressing member 150 and the molding plate 110 thereby guiding the moving direction of the pressing member so that the pressing member may apply an even pressure to the molding plate 110.

Furthermore, on the surface of the pressing member 150 facing the molding plate 110, there may be provided a vacuum inhaler(not illustrated) to inhale the air and residue discharged through the exhaust cavity 122, 132.

Herein, the vacuum inhaler(not illustrated) may inhale and remove the residue on the surface of the molding plate 110.

Meanwhile, the core material provided to the molding space 111 in the exemplary embodiment of the present disclosure may be mixed powder where fumed silica powder, organic and inorganic fiber powder etc. are mixed therein.

The following is an explanation on operating an exemplary embodiment of an apparatus for molding a core of a vacuum insulation panel explained above.

First of all, on the upper side of the second molding plate 130, core material is provided in powder state forming a core 105. The core material may be provided inside the molding cast 140, on the upper side of the second molding plate 130.

After the core material is provided on the upper side of the second molding plate 130, with the first molding plate 120 distanced from the molding cast 140, the second molding plate 130 is moved upwards, and when the second molding plate 130 is moved upwards by a certain extent, the first molding plate 120 is moved downwards. Herein, the first molding plate 120 is disposed on the upper side of the molding cast 140 without moving inside the molding cast 140 but closing the opening formed on the upper side of the molding cast 140.

This is because the second molding plate 130 moves with the upper side of the molding cast 140 open, and thus it is possible to accelerate the movement speed of the second molding plate 130, thereby reducing the time spent in a molding process.

When the core material provided on the upper side of the second molding plate 130 contacts the first molding plate 120, the core material is pressed between the first molding plate 120 and the second molding plate 130, and the powder state raw material is compressed by a high pressure, forming a compressed product, a core 105.

FIG. 5 is a schematic cross-sectional view of air and residue being discharged through a first molding plate and second molding plate in an apparatus for molding a core in a vacuum insulating panel according to FIG. 1.

Meanwhile, with reference to FIG. 5, in the moving process and pressing process of the first molding plate 120 and second molding plate 130, the air inside the molding space M is discharged through the exhaust cast 122, 132.

Herein, the cross-section area of the first surface 130a of the second molding plate 130 is bigger than the cross-section area of the second surface 130b so that in a pressing process, the air inside the molding space M and the residue including some core material that are not molded as a core 105 may be discharged between the molding cast 140 and the second molding plate 130, and especially, to prevent the residue from not being discharged to the space between the molding cast 140 and the second molding plate 130 due to the pressure difference during the discharge.

Meanwhile, the first molding plate 120 and the second molding plate 130 may press 1kgf/cm$^2$ to 10kgf/cm$^2$ pressure to the core material, so as to appropriately form the pattern 121 formed on the first molding plate 120 and second molding plate 130 on the core 105.

Meanwhile, to take out the core 105 that has been formed by compressing with the pressure received from the molding plate 110, it is possible to perform a process of detaching the core from inside the molding cast 140.

In the process of performing the aforementioned, the first molding plate 120 and second molding plate 130 are both moved upwards while maintaining a certain distance from each other so as to prevent deformation of the core 105 by the spring back effect due to the elastic force of air gap inside the core 105 and the core material itself.

Herein, by performing a synchronization control on the first molding plate 120 and second molding plate 130, the distance between the first molding plate 120 and second molding plate 130 is maintained to be practically the same.

Herein, the synchronization control refers to the method of, when there is a plurality of processes being processed within a certain period of time, controlling the exact flow of control between these processes.

That is, when the first molding plate 120 is moved a predetermined length, the second molding plate 130 is also moved a predetermined length by the synchronization control, thereby maintaining a certain distance between the first molding plate 120 and second molding plate 130.

Next is explanation on a vacuum insulation panel manufactured by an apparatus for molding a core of a vacuum insulation panel explained above.

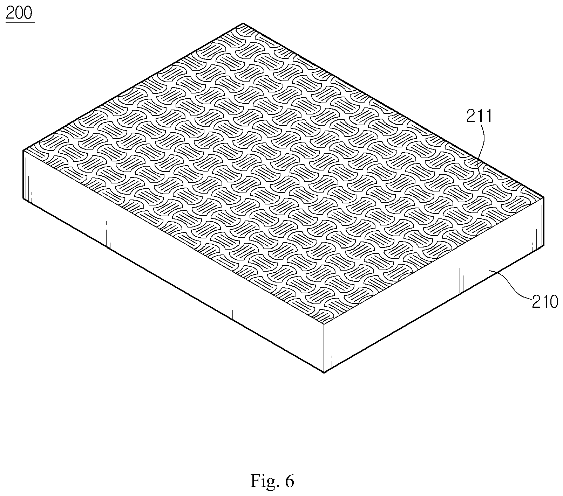

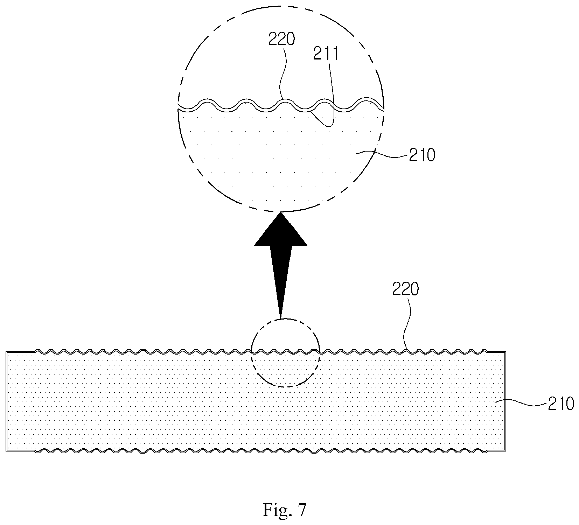

FIG. 6 is a schematic skewed view of a pattern formed on a surface of a core in a vacuum insulation panel according to an exemplary embodiment of the present disclosure, and FIG. 7 is a schematic cross-sectional view of a vacuum insulation panel according to FIG. 6.

With reference to FIGs. 6 and 7, the vacuum insulation panel 200 according to an exemplary embodiment of the present disclosure comprises a core 210 and a packaging material 220, and is capable of easily making the interior of the packaging material 220 in a vacuum condition when vacuum packaging it through the pattern 211 formed on the exterior of the core.

The core 210 is molded by an apparatus for molding a core of a vacuum insulation panel according to an exemplary embodiment of the present disclosure. On the core 210, there is provided a pattern portion 111 formed on a molding plate 110 on the exterior of the core, and a pattern 211 with the same shape thereof.

Herein, the pattern 211 of the core 210 may not only beautify the appearance of the core but also increase the elimination rate of the air inside the packaging material 220 during the packaging process of packaging the core 210 towards the outside with the packaging material 220.

Prior to explaining such a function of the pattern 211, the following is an explanation on a process for manufacturing a vacuum insulation panel after a molding process.

When a core 210 is molded by an apparatus for molding a core of a vacuum insulation panel according to an exemplary embodiment of the present disclosure, moisture is removed through a drying process, and a cutting process is performed to a certain standard at the user's request.

In addition, the core 210 cut to a certain standard by the aforementioned cutting process is accommodated inside a packaging material 220, and then a vacuum packaging processing is performed where the inside of the packaging material 220 is made in a vacuum condition by removing the air inside the packaging material 220 by a vacuum pump.

After the aforementioned vacuum packaging process, a sealing process is performed to seal the inlet of the packaging material 220.

Herein, it is desirable that the air inside the packaging material is discharged up until the inside of the packaging material 220 reaches a degree of vacuum of 1mbar or less, and the pattern 211 may function as a flow path enabling air flow so as to facilitate discharging of air.

In other words, in the case of discharging the air inside the packaging material 220 through the aforementioned vacuum packaging process, the air is discharged starting from the area near the inlet of the packaging material 220, and the farther from the inlet of the packaging material 220, the more difficult discharging of the air becomes.

If there were no pattern 211 formed on the core, once the air is discharged to some degree, the core 210 and the packaging material 220 would closely contact each other starting from the inlet of the packaging material 220, not creating a space for discharging the air. Accordingly, it would be difficult to discharge the air inside the packaging material 220 completely and create a vacuum condition.

Therefore, in the case of packaging a core 200 not having a pattern 211, creases would occur on the surface of the vacuum insulation panel due to the air not discharged.

However, according to the exemplary embodiment of the present disclosure, air may flow through the pattern 211 formed on the external surface of the core 210, so as to guide the air in the inside portion of the packaging material 220 to be discharged smoothly thereby discharging the maximum amount of air inside the packaging material 220.

The packaging material 220 may be one that is suitable for creating a vacuum condition inside thereof and accommodating a core 210, and according to an exemplary embodiment of the present disclosure, it may be aluminum film.

Otherwise, the packaging material 220 may be a shrink packaging film or felt that comprises a first packaging material(not illustrated) that contacts the core 210 and a second packaging material(not illustrated) made of aluminum film that covers the first packaging material so as to prevent elements such as moisture and air that deteriorates the insulating effect of the vacuum insulation panel from penetrating inside the core 210.

Meanwhile, regarding the combination relationship between the core 210 and the packaging material 220, when the core 210 is taken out with the core 210 accommodated inside the packaging material 220 in a vacuum condition, due to the difference of atmospheric pressure between the outside pressure and that of the inside the packaging material 220, the packaging material 220 closely contacts the core 210.

Herein, it is desirable to provide the packaging material with the size corresponding to the size of the core 210, but the size of the packaging material 220 is generally provided to be bigger than that of the core during the cutting and sealing process, and when there is no pattern, the remaining portion that cannot contact the core when the packaging material 220 closely contacts the core 210 creates creases on the surface of the vacuum insulation panel 200.

However, when a pattern 211 is formed on the core 210, a portion of the packaging material 220 closely contacts between the pattern 211 of the core 210, thereby increasing the area of contact between the packaging material 220 and the core 210, preventing the remaining portion from occurring when the packaging material 220 closely contacts the core 210, consequently preventing creases from occurring on the surface of the vacuum insulation panel 200.

As aforementioned, when the degree of adherence of the packaging material 220 to the core 210 improves, the insulating effect improves, increasing the product performance.

The table below compares a vacuum insulation panel 200 according to the exemplary embodiment of the present disclosure and a general produce not having a pattern on the surface of the core 210.

| | Vacuum insulation panel according to the exemplary embodiment of the present disclosure | Prior art vacuum insulation panel |
|---|---|---|
| Height of creases on the packaging material(mm) | 0.01 to 0.5 | 1 to 3 |
| Gap due to the creases | 0.5 or less | 1 to 3 |

According to the above table, a vacuum insulation panel according to an exemplary embodiment of the present disclosure may closely contact the packaging material 220 to the core 210, thereby reducing creases and minimizing the gap caused by the creases, consequently minimizing heat loss caused by the creases.

In a vacuum insulation panel according to an exemplary embodiment of the present disclosure, it is possible to beautify the appearance due to the pattern 211 on the surface of the core 210 and also increase the degree of vacuum inside the packaging material 220 since the pattern may act as a flow path for the air in a vacuum packaging process, thereby improving the insulating effect, minimizing the occurrence of creases on the surface of the vacuum insulation panel, and reducing the time needed for discharging the air inside the packaging material 220, consequently reducing the manufacturing costs.

A number of examples have been described above. Nevertheless, it will be understood that various modifications may be made. For example, suitable results may be achieved if the described techniques are performed in a different order and/or if components in a described system, architecture, device, or circuit are combined in a different matter and/or replaced or supplemented by other components or their equivalents. Accordingly, other implementations are within the scope of the following claims.

**DESCRIPTION OF REFERENCE NUMERALS**

100: APPARATUS FOR MOLDING CORE OF VACUUM INSULATION PANEL

110:    MOLDING PLATE
120:    FIRST MOLDING PLATE
130:    SECOND MOLDING PLATE
140:    MOLDING CAST
150:    PRESSING MEMBER
200:    VACUUM INSULATION PANEL
210:    CORE
220:    PACKAGING MATERIAL


**Claims**

1.  An apparatus (100) for molding a core of a vacuum insulation panel, the apparatus (100) comprising:

    a pair of molding plates (120, 130) distanced from and facing each other to form a molding space (M) where a core (210) is molded;
    a molding cast (140) configured to close the molding space (M) from outside; and
    a pressing member (150) configured to press at least one of the pair of molding plates (120, 130);
    wherein the at least one of the pair of molding plates (120, 130) comprises:

    a pattern portion (121) which is provided on a first surface (120a, 130a) facing the molding space and which transcribes a pattern on an exterior surface of the core (210); and
    an exhaust cavity (122) penetrating the molding plate (120, 130) in a thickness direction from the first surface (120a, 130a) to a second surface (120b, 130b) opposite the first surface (120a, 130a),
    wherein the pair of molding plates (120, 130) comprises a first molding plate (120) that is provided on an upper side of the molding cast (140) to open and close the molding cast (140) and a second molding plate (130) that is provided on a lower side of the molding space (M), and wherein the second molding plate (130) which moves in the molding space (M) has the first surface (130a) near the molding space (M) having a bigger cross-sectional area than a cross-sectional area of the second surface (130b) such that the farther away from the molding space (M), the wider the distance between the second molding plate (130) and molding cast (140) becomes.

2.  The apparatus (100) according to claim 1, wherein the cross-sectional area of the exhaust cavity (122, 132) of a second surface (120b, 130b) is bigger than that of the first surface (120a, 130a).

3.  The apparatus (100) according to claim 2, wherein the diameter of the exhaust cavity (122, 132) on the first surface (120a, 130a) is 0.2 mm to 3mm.

4.  The apparatus (100) according to claim 2, wherein the diameter of the exhaust cavity (122, 132) on the second surface (120b, 130b) is 2 mm to 10mm.

5.  The apparatus (100) according to claim 2, wherein the exhaust cavity (122, 132) comprises an increase section where the closer to the second surface (120b, 130b) from the first surface (120a, 130a), the bigger the diameter thereof, and a maintain section where the diameter thereof is maintained to be the same.

6.  The apparatus (100) according to any one of the preceding claims, wherein the pattern portion (121) is provided with repeatedly arranged protrusions (121a) that protrude from the first surface (120a, 130a) and repeatedly arranged recesses (121b) that recess towards the inside of the first surface (120a, 130a).

7.  The apparatus (100) according to claim 6, wherein the height of the protrusion (121a) is 0.02 mm to 0.5mm.

8. The apparatus (100) according to any one of the preceding claims,
wherein the molding plate (120, 130) comprises a coating member.

9. The apparatus (100) according to claim 1,
wherein the molding cast (140) has a bigger bottom surface that faces the second molding plate (130) than the second molding plate (130).

**Patentansprüche**

1. Vorrichtung (100) zum Formen eines Kerns einer Vakuumisolierplatte, wobei die Vorrichtung (100) folgendes umfasst:

Ein Paar Formplatten (120, 130), die im Abstand zueinander und einander zugewandt angeordnet sind, so dass sie einen Formraum (M) bilden, in dem ein Kern (210) geformt wird;
eine Formmanschette (140), die derart konfiguriert ist, dass sie den Formraum (M) von außen schließt; und
ein Pressteil (150), das derart konfiguriert ist, dass es mindestens eine Formplatte des Formplattenpaares (120,130) presst;
wobei die mindestens eine Formplatte des Formplattenpaares (120, 130) folgendes umfasst:

einen Musterabschnitt (121), der auf einer ersten Oberfläche (120a, 130a) vorgesehen ist, die dem Formraum zugewandt ist, und der ein Muster auf eine Außenfläche des Kerns (210) überträgt; und
eine Auslasskavität (122), die die Formplatte (120, 130) in Richtung der Dicke von der ersten Oberfläche (120a, 130a) zu einer zweiten Oberfläche (120b, 130b) gegenüber der ersten Oberfläche (120a, 130a) durchdringt,
wobei das Formplattenpaar (120, 130) eine erste Formplatte (120) umfasst, die an einer Oberseite der Formmanschette (140) vorgesehen ist, um die Formmanschette (140) zu öffnen und zu schließen, und eine zweite Formplatte (130), die an einer Unterseite des Formraums (M) vorgesehen ist, und wobei bei der sich im Formraum (M) bewegenden zweiten Formplatte (130) die erste Oberfläche (130a) in der Nähe des Formraums (M) eine größere Querschnittsfläche hat als eine Querschnittsfläche der zweiten Oberfläche (130b), so dass sich mit zunehmender Entfernung vom Formraum (M) der Abstand zwischen der zweiten Formplatte (130) und der Formmanschette (140) vergrößert.

2. Vorrichtung (100) nach Anspruch 1, bei der die Querschnittsfläche der Auslasskavität (122, 132) einer zweiten Oberfläche (120b, 130b) größer ist als diejenige der ersten Oberfläche (120a, 130a).

3. Vorrichtung (100) nach Anspruch 2, bei der der Durchmesser der Auslasskavität (122, 132) an der ersten Oberfläche (120a, 130a) 0,2 mm bis 3 mm beträgt.

4. Vorrichtung (100) nach Anspruch 2, bei der der Durchmesser der Auslasskavität (122, 132) an der zweiten Oberfläche (120b, 130b) 2 mm bis 10 mm beträgt.

5. Vorrichtung (100) nach Anspruch 2, bei der die Auslasskavität (122, 132) einen sich erweiternden Abschnitt umfasst, dessen Durchmesser sich mit zunehmender Annäherung von der ersten Oberfläche (120a, 130a) weg an die zweite Oberfläche (120b, 130b) erweitert, und einen gleichbleibenden Abschnitt, dessen Durchmesser gleichbleibend beibehalten wird.

6. Vorrichtung (100) nach einem der vorhergehenden Ansprüche, bei der der Musterabschnitt (121) mit wiederholt angeordneten Vorsprüngen (121a) versehen ist, die von der ersten Oberfläche (120a, 130a) hervorstehen, und mit wiederholt angeordneten Vertiefungen (121b), die zum Inneren der ersten Oberfläche (120a, 130a) hin verlaufen.

7. Vorrichtung (100) nach Anspruch 6, bei der die Höhe des Vorsprungs (121a) 0,02 mm bis 0,5 mm beträgt.

8. Vorrichtung (100) nach einem der vorhergehenden Ansprüche, bei der die Formplatte (120, 130) ein Beschichtungselement umfasst.

9. Vorrichtung (100) nach Anspruch 1, bei der die der zweiten Formplatte (130) zugewandte Bodenfläche der Formmanschette (140) größer als die zweite Formplatte (130) ist.

**Revendications**

1. Appareil (100) pour mouler un noyau d'un panneau d'isolation sous vide, l'appareil (100) comprenant :

    une paire de plaques de moulage (120, 130) espacées et se faisant face afin de former un espace de moulage (M) où un noyau (210) est moulé ;
    un corps de moulage (140) configurée pour fermer l'espace de moulage (M) de l'extérieur; et
    un élément de pression (150) configuré pour comprimer au moins l'une de la paire de plaques de moulage (120, 130) ;
    dans lequel la au moins une de la paire de plaques de moulage (120, 130) comprend :

    une partie de motif (121) qui est prévue sur une première surface (120a, 130a) faisant face à l'espace de moulage et qui transcrit un motif sur une surface extérieure d'un noyau (210) ; et
    une cavité d'évacuation (122) pénétrant dans la plaque de moulage (120, 130) dans le sens de l'épaisseur, de la première surface (120a, 130a) à une seconde surface (120b, 130b) opposée à la première surface (120a, 130a),
    dans lequel la paire de plaques de moulage (120, 130) comprend une première plaque de moulage (120) qui est prévue sur un côté supérieur du corps de moule (140) pour ouvrir et fermer la corps de moule (140) et une seconde plaque de moulage (130) qui est prévue sur un côté inférieur de l'espace de moulage (M) et dans lequel la seconde plaque de moulage (130) qui se déplace dans l'espace de moulage (M) a la première surface (130a) à proximité de l'espace de moulage (M) ayant une section transversale supérieure à une section transversale de la seconde surface (130b) de sorte que plus elle est éloignée de l'espace de moulage (M) plus la distance entre la seconde plaque de moulage (130) et le corps de moulage (140) s'élargit.

2. Appareil (100) selon la revendication 1,
    dans lequel la section transversale de la cavité d'évacuation (122, 132) d'une seconde surface (120b, 130b) est supérieure à celle de la première surface (120a, 130a).

3. Appareil (100) selon la revendication 2,
    dans lequel le diamètre de la cavité d'évacuation (122, 132) sur la première surface (120a, 130a) est de 0,2 mm à 3 mm.

4. Appareil (100) selon la revendication 2,
    dans lequel le diamètre de la cavité d'évacuation (122,132) sur la seconde surface (120b, 130b) est de 2 mm à 10 mm.

5. Appareil (100) selon la revendication 2,
    dans lequel le diamètre de la cavité d'évacuation (122, 132) comprend une section d'augmentation dans laquelle plus la seconde surface (120b, 130b) est proche de la première surface (120a, 130a) plus son diamètre est grand, et une section de maintien où son diamètre est maintenu pour être le même.

6. Appareil (100) selon l'une quelconque des revendications précédentes,
    dans lequel la partie de motif (121) est prévue avec des saillies (121a) agencées de manière répétée qui font saillie de la première surface (120a, 130a) et des évidements (121b) agencés de manière répétée qui s'enfoncent vers l'intérieur de la première surface (120a, 130a).

7. Appareil (100) selon la revendication 6,
    dans lequel la hauteur de la saillie (121a) est de 0,02 mm à 0,5 mm.

8. Appareil (100) selon l'une quelconque des revendications précédentes,
    dans lequel la plaque de moulage (120,130) comprend un élément de revêtement.

9. Appareil (100) selon la revendication 1,
    dans lequel le corps de moulage (140) a une surface inférieure plus grande qui fait face à la seconde plaque de moulage (130), que la seconde plaque de moulage (130).

Fig. 1

Fig. 2

Fig. 3

Fig. 4

(a)

(b)

Fig. 5

Fig. 6

Fig. 7

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 20120028048
- US 4564547 A
- US 2026940 A
- GB 2284172 A
- EP 1098104 A